# NEUE EUROPÄISCHE PATENTSCHRIFT

(11) **EP 2 670 577 B2**
(45) Veröffentlichungstag und Bekanntmachung des Hinweises auf die Entscheidung über den Einspruch: **03.04.2024**
(45) Hinweis auf die Patenterteilung: 07.04.2021
(21) Anmeldenummer: 12703059.1
(22) Anmeldetag: 01.02.2012
(51) Int. Cl.: B29C 48/08, B29C 48/90, B29C 48/88, B29C 48/92, B29C 43/22, B29C 43/24

(54) **KÜHLVORRICHTUNG UND KÜHLVERFAHREN FÜR EIN EXTRUDAT**
COOLING DEVICE AND COOLING METHOD FOR AN EXTRUDATE
DISPOSITIF DE REFROIDISSEMENT ET PROCÉDÉ DE REFROIDISSEMENT D'UN PRODUIT D'EXTRUSION

(30) Priorität: 03.02.2011 DE 102011003604
(43) Veröffentlichungstag der Anmeldung: 11.12.2013
(73) Patentinhaber: battenfeld-cincinnati Germany GmbH, 32547 Bad Oeynhausen (DE)
(72) Erfinder: ROTH, Michael, 32549 Bad Oeynhausen (DE)
(86) Internationale Anmeldenummer: PCT/EP2012/051718
(87) Internationale Veröffentlichungsnummer: WO 2012/104359

(56) Entgegenhaltungen:
- EP-A2- 1 600 277
- EP-A2- 2 184 156
- DE-A1- 3 521 331
- DE-A1- 3 802 095
- JP-A- 2004 050 690
- US-A- 4 214 857
- US-A1- 2006 260 484

## Beschreibung

Die Erfindung betrifft eine Vorrichtung zum Kalibrieren und Kühlen eines extrudierten Flacherzeugnisses aus Kunststoff, die aus zwei Hauptwalzen besteht, wobei den Hauptwalzen ein Glättwerksraum mit hintereinander angeordneten Walzen nachgeschaltet ist, wobei zwischen den zwei Hauptwalzen und den nachgeschalteten hintereinander angeordneten Walzen jeweils ein verstellbarer Kalibrierspalt vorliegt, wobei die Kalibrierspalte während des Extrusionsprozesses verstellbar sind und damit das Flacherzeugnis in den Kalibrierspalten gequetscht wird.

Das Thermoformen ist innerhalb der Kunststoffverarbeitung ein anerkanntes Verfahren zur Massenherstellung von Deckeln, Bechern und Schalen als Verpackungen.

Folien für diesen Prozess für Lebensmittel sind typisch zwischen 150 und 3.000µm stark. Für technische Teile (Automotive, Haushalt, etc.) sind auch Plattenstärken bis 15mm üblich.

Die für den Tiefziehprozess geeignete Folie wird auf Glättwerksanlagen hergestellt. In der Regel werden hierfür 3-Walzen-Glättwerke benutzt, bei denen über verschiedene mechanische Walzenzustellkonzepte ein oder zwei einstellbare Walzenspalte erzeugt werden. Der Kunststoff wird dabei aus einer Breitschlitzdüse kommend im Glättwerk kalibriert und das Oberflächenfinish der Folie erzeugt. Die aus dem Extruder austretende Schmelze wird kalibriert und herunter gekühlt. Mitunter sind Nachkühlwalzen nachgeschaltet um die erforderliche Endtemperatur zu erreichen.

Der oben beschriebene Stand der Technik ist ausstoßleistungsbeschränkt, weil man max. zwei Walzenspalte zur Verfügung hat, um die Kalibrierung der Folienoberfläche zu erzielen. Steigert man die Durchsatzleistung jedoch, so ist zu beobachten, das die bereits kalibrierte Folienoberfläche wieder, initiiert durch die Kernwärme der Folie, auf schmilzt und die Oberflächenausbildung, die meist in Hochglanz, teilweise aber auch mit Prägestrukturenausgeführt ist, zerstört wird. Bei steigender Folienstärke wird dieser Nachteil verstärkt. Entscheidend für die Ausstoßbegrenzung sind die ersten beiden Walzenspalte und das Kühlverhalten der damit im Zusammenhang stehenden zwei bis drei Kühlwalzen.

Man versucht diesen Beschränkungen durch verschiedene Maßnamen zu begegnen:
- doppel- und mehrbahniger Anlagenausführung:
   Ist Nachteilig, weil das Handling solch einer breiteren Maschine mit zunehmender Breite überproportional steigt. Ferner steigen Investitionskosten während die erreichbaren Folientoleranzen sinken.
- Einsatz von dünneren Wandstärken der Walzen und Einsatz von höher leitfähigen Materialien:
   Ist Nachteilig, weil die mechanische Instabilität mit reduzierter Mantelstärke wächst. Höher leitfähige Werkstoffe (z.B. Kupfer) sensibler ist für mechanische Beschädigung der Walzenoberflächen.
- Auswahl von größeren Walzendurchmessern zur Verlängerung der Kühlstrecke:
   Ist Nachteilig, weil das Handling der Maschine über den Abstand Extruderdüse zu Walze und damit zum Walzenspalt maßgeblich beeinflusst wird, jedoch bei größeren Walzendurchmesser dieser Abstand zwischen Düse und Walzenspalt aber ständig wächst. Ferner wird der Betrieb bei kleinen Abzugsgeschwindigkeiten erschwert und somit der Anfahr- und Umstellprozess. Die Kühlung an sich wird über die lange einseitige Kühlung (eine Seite Stahl - eine Seite Luft) wesentlich ungleichmäßiger und die Folie somit inhomogener.

Die DE 10 2005 006 412 schlägt ferner vor, einem Glättwerk eine Kühlstrecke aus hintereinander angeordneten Walzenpaaren nachzuschalten, wodurch die Folie über eine längere Strecke gekühlt und geformt werden kann.

Auch aus der DE 3 802 095 A1 ist eine Vorrichtung zur gleichmäßigen, beidseitigen und schockartigen Abkühlung von Thermoplasten bekannt. Hier wird vorgeschlagen, dass einer Glätt- und Kühlvorrichtung ein Walzenpaar vorgeschaltet ist, einen stufenlos verstellbaren Glättspalt bildet und von dem jede Walze separat temperiert bzw. gekühlt wird.

Aus der EP 2 184 156 A2 ist ein Verfahren zum von Kunststoffflacherzeugnissen bekannt bei dem vorgesehen ist, dass durch Verstellen der Walzen in der Kühlstrecke in eine zueinander versetzte Anordnung der Umschlingungsgrad des Kunststoffflacherzeugnisses um die jeweilige Walze verändert und damit die Kühlleistung erhöht oder minimiert wird, wobei mittels einer entsprechenden Steuerung bei jedem Verstellvorgang die einmal vorgegebene Spaltweite konstant gehalten wird.

Die EP 1 600 277 A2 schlägt eine Vorrichtung zum Kalibrieren und Kühlen einer Kunststofffolie oder Kunststoffplatte vor bei der den Walzen eine Kühlstrecke nachgeschaltet ist, dabei ist vorgesehen, dass die nachgeschaltete Kühlstrecke aus hintereinander angeordneten Walzenpaaren besteht.

Aus der US 4,211,857 A1 ist eine Mehrwalzenkalander zur Herstellung einer Folie aus elastischem Material bekannt, der einen Kalanderrahmen und eine Reihe von Walzen, die in dem Kalanderrahmen montiert sind umfasst. Die Walzen umfassen eine Einlasswalze und eine Reihe vertikal übereinanderliegender Walzen, wobei alle benachbarten Walzen variabel voneinander beabstandet sind, um variable Walzenspalte zwischen jedem benachbarten Walzenpaar bereitzustellen.

Aufgabe der Erfindung ist es daher, eine Vorrichtung anzubieten, die für unterschiedliche Folienstärken verwendbar und mit der trotzdem eine gleichmäßige Folienqualität erreichbar ist.

Die Lösung der Aufgabe erfolgt durch die Merkmale des Anspruches 1.

Besonders vorteilhaft ist es, wenn zwischen den einzelnen Walzen unterschiedliche Kalibrierspalte eingestellt werden können. Damit kann, den während der Produktion auftretenden Schwankungen in der Folienstärke und der eventuell nicht ganz homogenen Kühlleistung in den Walzen, entgegen gewirkt werden.

Weiterbildungsgemäß ist vorgesehen, dass der Abstand zwischen den Walzen so verstellt werden kann, dass kein Kalibrierspalt entsteht, wodurch das Flacherzeugnis nicht gequetscht wird. Die Folie umläuft dann die Walzen zwar immer noch quasi durch einen Spalt, dieser ist aber, bedingt durch den sehr großen Abstand der Walzen zueinander, ohne zusätzlichen Einfluss auf die Folie. Lediglich die Kühlung wird über die Walze übertragen, ein Quetschen und Verformen der Folien findet in diesem Bereich nicht statt.

Jede der Walzen kann einfach nur mitlaufen oder die Förderung der Folie unterstützen, weshalb weiterbildungsgemäß vorgesehen ist, dass die Walzen einzeln oder zusammen antreibbar sind.

Die Walzen können auch temperiert sein, um einerseits die Kühlung zu unterstützen, aber auch die Folie partiell auf bestimmte Temperatur zu halten und somit weniger zu Kühlen oder sogar wieder leicht zu erwärmen.

Die Folie durchläuft die Walzen quasi in einer Wellenlinie und kommt somit einmal mit der eine und einmal mit der anderen Seite mit den Walzen in Kontakt. Damit der Einfluss, was insbesondere bei dickeren Folien, bedingt durch die Wärmeleitung, der Fall ist, der Berührungsflächen zwischen Walze und Folienoberfläche für beide Folienseiten weitgehend gleich ist, ist in einer Fortbildung vorgesehen, dass der Durchmesser der Hauptwalzen und der nachgeschalteten Walzen so gewählt ist, dass die Berührungsflächen zwischen Flacherzeugnis und Walzen auf beiden Seiten des Flacherzeugnisses weitgehend gleich ist.

Damit in den Prozess direkt eingegriffen werden kann, ist weiterhin vorgesehen, dass mittels mehreren Temperaturmessstellen die Temperatur des Flacherzeugnisses überwachbar ist und in Abhängigkeit der Temperatur der Kalibrierspalt individuell verstellbar ist.

Mit der erfindungsgemäßen Vorrichtung kann bei der Herstellung extrudierter Flacherzeugnisse direkt in den Prozess eingegriffen und die Qualität des Erzeugnisses beeinflusst werden.

In den Zeichnungen ist schematisch eine erfindungsgemäße Vorrichtung gezeigt:
- Fig. 1: zeigt die Vorrichtung ohne Folie in geöffnetem Zustand,
- Fig. 2: in geschlossenem Zustand mit Folie und
- Fig. 3: gibt einen schematischen Aufbau einer Anlage wieder.

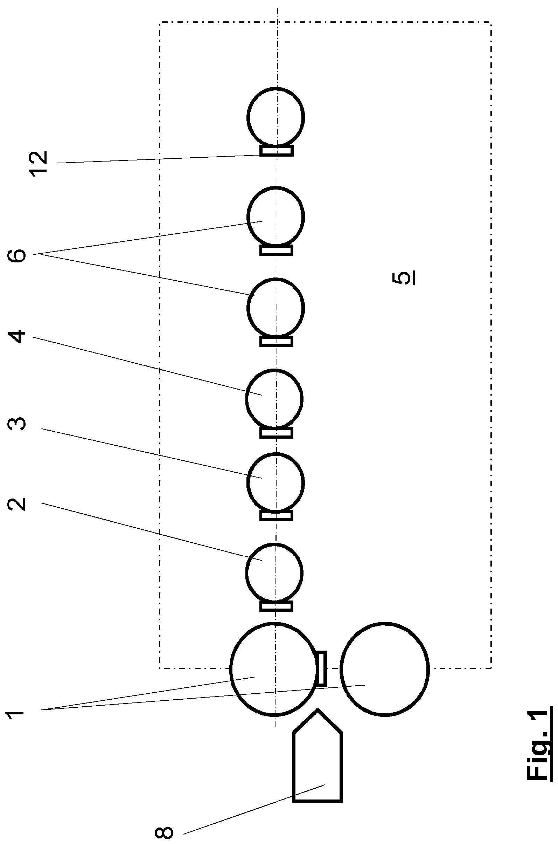

Figur 1 zeigt die beiden Hauptwalzen 1, in dessen Spalt Kunststoffmasse für die Folie aus einer Schlitzdüse 8 eingebracht wird. Der Glättwerksraum 5 umfasst mehrere Walzen 2, 3, 4. Die Anordnung der Walzen ist so gewählt, dass zu jeder benachbarten Walze ein Walzenspalte gebildet wird.

Der Abstand zwischen den Walzen ist verstellbar und kann somit zu unterschiedlichen Kalibrierspalten eingestellt werden. In Figur 1 sind alle Walzen auf Abstand eingestellt und bilden so noch keine Kalibrierspalte.

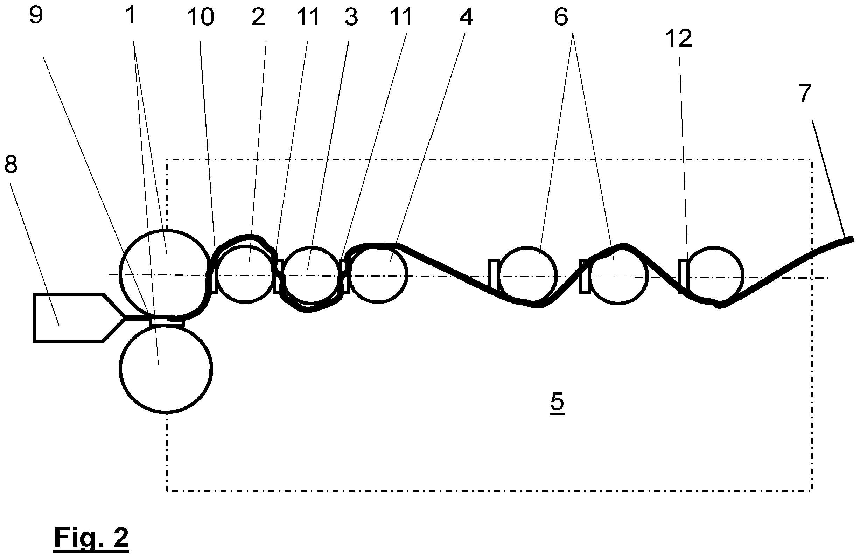

Aus der Figur 2 ist zu entnehmen, dass die Walzen in andere Stellungen verfahren sind, beispielhaft ist hier ein System mit vier Kalibrierspalten dargestellt. Über die Schlitzdüse 8 wird Kunststoffmassen in den Spalt 9 zwischen den Hauptwalzen 1 eingebracht und in einem ersten Schritt vorkalibriert. Die Folie 7 durchläuft den nächsten Kalibrierspalt 10 zwischen einer Hauptwalze 1 und der ersten nachgeschalteten Walze 2, sowie die Kalibrierspalte 11 zwischen den Walzen 2 und 3 sowie 3 und 4.

Die Abstände zwischen diesen Walzen und damit der erzeugte Kalibrierspalt sind so gewählt, dass die Folie 7 in jedem Spalt so verformt wird, dass nach Durchlauf aller Kalibrierspalte eine Folie 7 mit gleichmäßiger Qualität entsteht.

Die weiteren nachgeschalteten Walzen 6 sind in eine solche Stellung gefahren, dass sie keinen Kalibrierspalt erzeugen. Die Folie 7 umläuft diese Walzen 6 ohne zwischen diesen kalibriert zu werden.

Die dort schematisch dargestellten Verstellelemente 12 sind seitlich neben den Walzen angeordnet und können die Lage der Walzen zueinander verändern. Da sie jeweils auf beiden Seiten jeder Walze angeordnet sind, kann jede Walze nicht nur einzeln, sondern auch im Winkel relativ zur benachbarten Walze verändert werden.

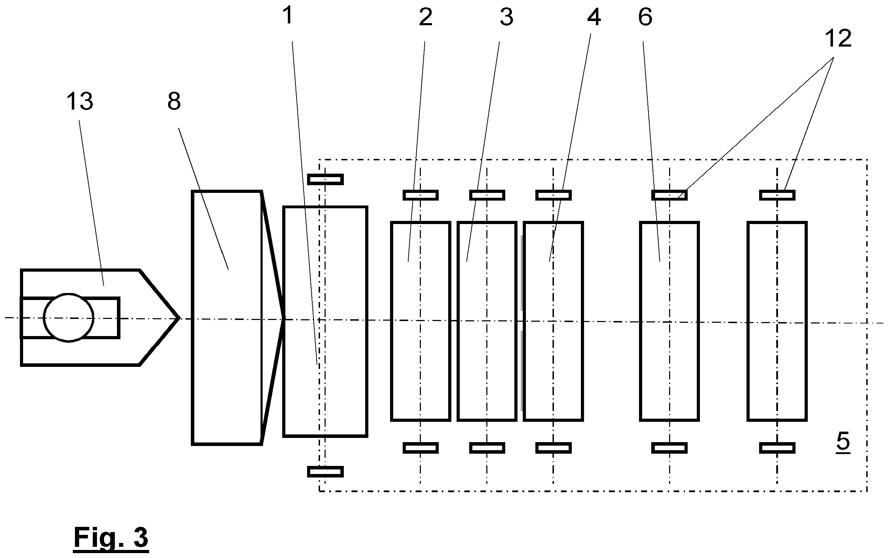

Zur Verdeutlichung ist eine Draufsicht einer typischen Anlage mit den wesentlichen Komponenten, wie Extruder 13, den Walzen 1 bis 4 und dem Glättwerksraum 5, in Figur 3 wiedergegeben, da die Darstellungen in den Figuren 1 und 2 immer Schnitte durch Anlagenteile sind. Gleiche oder analoge Teile sind in allen Figuren immer mit gleichen Bezugsziffern bezeichnet.

### Bezugszeichenliste:

- 1: Hauptwalzen
- 2: erste nachgeschaltete Walze
- 3: zweite nachgeschaltete Walze
- 4: dritte nachgeschaltete Walze
- 5: Glättwerksraum
- 6: weitere nachgeschaltete Walzen
- 7: Flacherzeugnis
- 8: Schlitzdüse
- 9: Kalibrierspalt zwischen 1
- 10: Kalibrierspalt zwischen 1 und 2
- 11: Kalibrierspalt zwischen 2 und 3 oder 3 und 4
- 12: Verstellelement
- 13: Extruder

## Patentansprüche

1. Vorrichtung zum Kalibrieren und Kühlen eines extrudierten Flacherzeugnisses (7) aus Kunststoff, die aus zwei Hauptwalzen (1) besteht,
wobei den zwei Hauptwalzen ein Glättwerksraum (5) mit hintereinander angeordneten Walzen (2, 3, 4) nachgeschaltet ist,
zwischen den zwei Hauptwalzen (1) und den nachgeschalteten hintereinander angeordneten Walzen (2, 3, 4) jeweils ein verstellbarer Kalibrierspalt (9, 10, 11) vorliegt,
wobei die Kalibrierspalte (9, 10, 11) während des Extrusionsprozesses verstellbar sind und damit das Flacherzeugnis (7) in den Kalibrierspalten (9, 10, 11) gequetscht wird,
**dadurch gekennzeichnet, dass**
der Durchmesser der zwei Hauptwalzen (1) und der nachgeschalteten hintereinander angeordneten Walzen (2, 3, 4) so gewählt ist, dass die Berührungsflächen zwischen Flacherzeugnis (7) und den zwei Hauptwalzen (1) sowie den nachgeschalteten hintereinander angeordneten Walzen (2, 3, 4) auf beiden Seiten des Flacherzeugnisses (7) weitgehend gleich ist,
sich die Rotationsachsen der nachgeschalteten hintereinander angeordneten Walzen (2, 3, 4) auf einer Ebene befinden, wobei sich die Rotationsachse einer der zwei Hauptwalzen (1) in der gleichen Ebene befindet wie die Rotationsachsen aller nachgeschalteten hintereinander angeordneten Walzen (2, 3, 4, 6),
jede der nachgeschalteten Walzen (2, 3, 4, 6) sowie diese eine Hauptwalze Verstellelemente (12) aufweisen, die seitlich neben jeder nachgeschalteten Walze (2, 3, 4, 6) und dieser einen Hauptwalze (1) angeordnet sind.

2. Vorrichtung nach Anspruch 1, **dadurch gekennzeichnet, dass** die zwischen den zwei Hauptwalzen (1) und den nachgeschalteten hintereinander angeordneten Walzen (2, 3, 4) unterschiedliche Kalibrierspalte (9, 10, 11) einstellbar sind.

3. Vorrichtung nach Anspruch 1 oder 2, **dadurch gekennzeichnet, dass** der Abstand zwischen den zwei Hauptwalzen (1) und den nachgeschalteten hintereinander angeordneten Walzen (2, 3, 4) so verstellbar ist, dass kein Kalibrierspalt (9, 10, 11) entsteht, wodurch das Flacherzeugnis (7) nicht gequetscht wird.

4. Vorrichtung nach Anspruch 3, **dadurch gekennzeichnet, dass** die zwei Hauptwalzen (1) und die nachgeschalteten hintereinander angeordneten Walzen (2, 3, 4) einzeln oder zusammen antreibbar sind.

5. Vorrichtung nach Anspruch 3, **dadurch gekennzeichnet, dass** die zwei Hauptwalzen (1) und die nachgeschalteten hintereinander angeordneten Walzen (2, 3, 4) temperiert sind.

6. Vorrichtung nach Anspruch 1 oder 2, **dadurch gekennzeichnet, dass** mittels mehreren Temperaturmessstellen die Temperatur des Flacherzeugnisses (7) überwachbar ist und in Abhängigkeit der Temperatur die Kalibrierspalte individuell verstellbar sind.

## Claims

1. Apparatus for calibrating and cooling a flat plastic product (7) consisting of two main rollers (1),
the two main rollers (1) being followed by a calender space (5) comprising successively arranged rollers (2, 3, 4),
an adjustable calibration gap (9, 10, 11) existing between each of the two main rollers (1) and the successively adjusted rollers (2, 3,4),
the calibration gaps (9, 10, 11) being adjustable during the calibration process so that the flat product (7) is squeezed within the calibration gaps (9, 10, 11),
**characterized in that**
the diameter of the two main rollers (1) and the successively arranged downstream rollers (2, 3, 4) is designed such that the contact surfaces between the flat product (7) and the two main rollers (1) and the successively arranged downstream rollers (2, 3, 4) is largely the same on either side of the flat product (7),
and that the rotation axes of the successively arranged downstream rollers (2, 3, 4) are situated on one level, the rotation axis of one of the two main rollers (1) being on the same level as the rotation axes of all the successively arranged downstream rollers (2, 3, 4, 6),
and that each of the downstream rollers (2, 3, 4, 6) as well as said one main roller feature adjustment elements (12) which are arranged laterally next to each of the downstream rollers (2, 3, 4, 6) and said one main roller (1).

2. Apparatus according to claim 1, **characterized in that** different calibration gaps (9, 10, 11) can be formed between each of the two main rollers (1) and the successively arranged downstream rollers (2, 3, 4).

3. Apparatus according to claim 1 or 2, **characterized in that** the gap between the two main rollers (1) and the successively arranged downstream rollers (2, 3, 4) can be adjusted in such a way that no calibration gap is formed, so that the flat product (7) is not squeezed.

4. Apparatus according to claim 3, **characterized in that** the two main rollers (1) and the successively arranged downstream rollers (2, 3, 4) can be driven separately or centrally.

5. Apparatus according to claim 3, **characterized in that** the two main rollers (1) and the successively arranged downstream rollers (2, 3, 4) are tempered.

6. Apparatus according to claim 1 or 2, **characterized in that** the temperature of the flat product (7) can be monitored at different temperature measuring points and that the calibration gaps can be individually adjusted depending on the temperature.

## Revendications

1. Dispositif de calibrage et de refroidissement d'un produit plat en plastique (7), comprenant deux cylindres principaux (1),
une calandre avec des cylindres arrangés successivement (2, 3, 4) étant placée en aval des cylindres principaux (1),
une fente d'extrusion réglable (9, 10, 11) existant entre chacun des deux cylindres principaux (1) et les cylindres arrangés successivement et placés en aval (2, 3, 4),
les fentes d'extrusion (9, 10, 11) étant réglables lors du processus d'extrusion afin que le produit plat (7) soit pressé entre les fentes d'extrusion,
**caractérisé en ce que**
le diamètre des deux cylindres principaux (1) et des cylindres arrangés successivement et placés en aval (2, 3, 4) est choisi de manière à ce que les surfaces de contact entre le produit plat (7) et les deux cylindres principaux (1) ainsi que les cylindres arrangés successivement et placés en aval (2, 3, 4) soient largement égales sur les deux côtés du produit plat (7),
que les axes de rotation des cylindres arrangés successivement et placés en aval (2, 3, 4) sont placés sur le même niveau, l'axe de rotation d'une des deux cylindres principaux (1) étant placé sur le même niveau que les axes de rotation de tous les cylindres arrangés successivement et placés en aval (2, 3, 4),
et que chacune des cylindres placés en aval (2, 3, 4) ainsi que ledit un cylindre principal comprennent des éléments de réglage (12) qui sont disposés latéralement à côté de chacun des cylindres en aval (2, 3, 4, 6) et ledit un cylindre principal (1).

2. Dispositif selon la revendication 1, **caractérisé en ce que** des fentes d'extrusion différentes (9, 10, 11) peuvent être ajustées entre les deux cylindres principaux (1) et les cylindres arrangés successivement et placés en aval (2, 3, 4).

3. Dispositif selon l'une quelconque des revendications 1 ou 2, **caractérisé en ce que** la distance entre les deux cylindres principaux (1) et les cylindres arrangés successivement et placés en aval (2, 3, 4) peut être réglée de manière à ce qu'aucune fente de calibrage (9, 10, 11) soit formée, de sorte que le produit plat (7) n'est pas pressé.

4. Dispositif selon la revendication 3, **caractérisé en ce que** les deux cylindres principaux (1) et les cylindres arrangés successivement et placés en aval (2, 3, 4) peuvent être entraîné individuellement ou en commun.

5. Dispositif selon la revendication 3, **caractérisé en ce que** les deux cylindres principaux (1) et les cylindres arrangés successivement et placés en aval (2, 3, 4) sont tempérés.

6. Dispositif selon l'une quelconque des revendications 1 ou 2, **caractérisé en ce que** la température du produit plat (7) peut être surveillée au moyen de plusieurs points de mesure de température et que les fentes d'extrusion peuvent être ajustées individuellement en fonction de la température.
